# DEMANDE DE BREVET EUROPEEN

(11) **EP 4 074 576 A1**
(43) Date de publication de la demande: **19.10.2022**
(21) Numéro de dépôt: 22162629.4
(22) Date de dépôt: 17.03.2022
(51) Int. Cl.: B62B 5/00

(54) **DISPOSITIF DE TRANSPORT ET DE DISTRIBUTION D'UN OBJET ENROULE**

(30) Priorité: 12.04.2021 FR 2103750
(71) Demandeur: Rythmes et Sons, 67400 Illkirch Graffenstaden (FR)
(72) Inventeur: WALTER, Claude, 67400 ILLKIRCH GRAFFENSTADEN (FR)
(74) Mandataire: Cabinet Bleger-Rhein-Poupon

(57) **Abrégé**

Dispositif de transport et de distribution (1) d'un objet enroulé, ce dispositif comporte, d'une part, un support (2) destiné à recevoir un objet enroulé, d'autre part, une pluralité de chapes (3a ; 3b ; 3c ; 3d) et une pluralité de moyens de montage (4a ; 4b ; 4c ; 4d) pour monter l'une de ces chapes sur le support en rotation autour d'un axe de rotation, d'autre part encore, une pluralité de roues (6a ; 6b ; 6c ; 6d) et une pluralité de moyens de montage (7a ; 7b ; 7c ; 7d) pour monter l'une desdites roues sur l'une desdites chapes en rotation autour d'un axe de rotation. Ce dispositif est caractérisé en ce que chaque chape est complétée par un système d'immobilisation (9a ; 9b ; 9c ; 9d) et que ces systèmes d'immobilisation sont agencés en sorte que, en configuration active d'immobilisation, les axes de rotation des roues sont sécants en un même point.

## Description

L'invention concerne un dispositif de transport et de distribution d'un objet enroulé. L'invention concerne, également, un ensemble comportant un tel dispositif de transport et de distribution ainsi qu'un enroulement d'un objet enroulé.

La présente invention concerne le domaine de la fabrication des dispositifs qui sont configurés pour transporter et pour distribuer un objet enroulé, plus particulièrement sur le lieu d'utilisation de cet objet, notamment sur un chantier. Cette invention trouvera une application particulièrement appropriée, mais aucunement limitative, lorsqu'il s'agit de transporter un enroulement de câble électrique sur un chantier et d'assurer la distribution de ce câble électrique sur ce chantier, notamment lors de la réalisation d'une installation électrique.

L'on connait, d'ores et déjà, des enroulements de câble électrique qu'on transporte sur un chantier. Lors de la mise en place du câble électrique d'un tel enroulement sur un chantier, on déroule ce câble à partir de l'enroulement et on l'engage à l'intérieur d'une gaine électrique, voire on le tire à l'intérieur d'une telle gaine électrique, notamment à l'aide d'un tire-fil. A ce propos, on observera que l'enroulement de câble électrique repose usuellement au sol de sorte que, lorsqu'on déroule le câble à partir de cet enroulement, ce câble a tendance à se vriller de plus en plus au fur et à mesure de son déroulement ce qui entrave la pénétration de ce câble à l'intérieur de la gaine ainsi que sa progression à l'intérieur de cette gaine.

L'on connait, également, des tourets de câble qui comportent, d'une part, un cylindre, qui s'étend selon un axe, et autour duquel est enroulé un câble et, d'autre part, des flasques latéraux parallèles, qui adoptent chacun la forme d'un disque, et entre lesquels est interposé le cylindre. Lorsqu'il s'agit d'acheminer un tel touret de câble sur le lieu d'utilisation du câble, il est usuel de faire rouler ce touret sur ses flasques latéraux. Arrivé sur le lieu d'utilisation du câble, le touret est redressé pour reposer sur l'un des flasques latéraux. Il convient alors de dérouler une longueur suffisante de ce câble à partir du touret, ceci avant de mettre en place ce câble, notamment en positionnant celui-ci à l'intérieur d'une gaine électrique, plus particulièrement comme décrit ci-dessus. Là encore, au fur et à mesure de son introduction et de sa progression à l'intérieur de la gaine, ce câble a de plus en plus tendance à se vriller ce qui entrave cette introduction et cette progression.

Il a été apporté une solution à ce problème par le biais d'un dispositif de transport et de distribution d'un tel câble enroulé sur un touret. Un tel dispositif comporte, d'une part, un châssis tubulaire, d'une part, des roues montées sous ce châssis tubulaire, d'autre part encore, au moins une poignée, qui équipe ce châssis tubulaire, et qui permet une manipulation du dispositif notamment pour son acheminement sur un chantier, d'autre part également, un support, qui équipe le châssis tubulaire, et sur lequel un touret de câble est monté en rotation. Ce dispositif de transport et de distribution présente les inconvénients d'être lourd, encombrant et onéreux.

La présente invention se veut de remédier aux dispositifs de l'état de la technique.

A cet effet, l'invention concerne un dispositif de transport et de distribution d'un objet enroulé, ce dispositif comporte, d'une part, un support qui est destiné à recevoir un objet enroulé, d'autre part, une pluralité de chapes ainsi qu'une pluralité de moyens de montage chacun conçu pour monter l'une de ces chapes sur le support, ceci en rotation autour d'un axe de rotation parallèle à au moins l'un des axes de rotation autour duquel au moins une autre desdites chapes est montée en rotation sur le support, d'autre part encore, une pluralité de roues ainsi qu'une pluralité de moyens de montage chacun conçu pour monter l'une desdites roues sur l'une desdites chapes, ceci en rotation autour d'un axe de rotation. Ce dispositif de transport et de distribution est caractérisé par le fait que chaque chape est complétée par un système d'immobilisation, que comporte le dispositif de transport et de distribution, et qui est conçu pour adopter une configuration inactive et une configuration active d'immobilisation d'une telle chape par rapport au support tandis que les systèmes d'immobilisation sont agencés en sorte que, en configuration active d'immobilisation de ces systèmes d'immobilisation, les axes de rotation des roues sont sécants en un même point.

Selon une autre caractéristique, les roues s'étendent, chacune, selon un plan qui est perpendiculaire à l'axe de rotation d'une telle roue. Les systèmes d'immobilisation sont, alors, agencés pour immobiliser les chapes par rapport au support, ceci dans une position dans laquelle les plans, selon lesquels s'étendent les roues, sont tangents, soit à un même cercle, soit à une pluralité de cercles concentriques.

Encore une autre caractéristique concerne le fait que le point en lequel les axes de rotation des roues sont sécants est confondu avec le centre du cercle ou avec le centre des cercles concentriques.

Selon une caractéristique additionnelle, chaque système d'immobilisation comporte, d'une part, des moyens d'immobilisation que comporte ladite chape qui est complétée par un tel système d'immobilisation, d'autre part, des moyens d'immobilisation complémentaires qui sont mobiles au moins par rapport à la chape qui est complétée par un tel système d'immobilisation, ceci entre une position inactive d'immobilisation dans laquelle ces moyens d'immobilisation complémentaires ne coopèrent pas avec les moyens d'immobilisation et une position active dans laquelle ces moyens d'immobilisation complémentaires coopèrent avec les moyens d'immobilisation et, d'autre part encore, des moyens de commande qui sont configurés pour commander le passage des moyens d'immobilisation complémentaires de la position inactive d'immobilisation à la position active d'immobilisation et inversement.

Encore une autre caractéristique concerne le fait que, d'une part, le support comporte un plateau qui s'étend selon un plan et que, d'autre part, les axes de rotation autour desquels lesdites chapes sont montées en rotation sur le support sont perpendiculaires au plan selon lequel s'étend le plateau et/ou les axes de rotation autour desquels lesdites roues sont montées en rotation sur lesdites chapes sont parallèles au plan selon lequel s'étend le plateau.

Une caractéristique additionnelle concerne le fait que le plateau comporte des bords latéraux qui présentent, chacun, un décrochement localisé à proximité de l'un des systèmes d'immobilisation et/ou de l'un des moyens de montage de l'une des chapes sur le plateau.

L'invention concerne, encore, un ensemble comportant, d'une part, un dispositif de transport et de distribution d'un objet enroulé et, d'autre part, un enroulement d'un objet enroulé qui s'étend autour d'un axe d'enroulement. Cet ensemble est caractérisé par le fait que, d'une part, le dispositif de transport et de distribution d'un objet enroulé présente les caractéristiques décrites ci-dessus et, d'autre part, l'enroulement est positionné sur le support en sorte que l'axe d'enroulement, soit passe par le point en lequel les axes de rotation des roues sont sécants, soit est au moins parallèle à un axe qui passe par ce point.

L'invention concerne, également, un ensemble comportant, d'une part, un dispositif de transport et de distribution d'un objet enroulé et, d'autre part, un touret de câble qui comporte un cylindre qui s'étend selon un axe de rotation ainsi qu'un câble qui est enroulé autour de ce cylindre. Cet ensemble est caractérisé par le fait que, d'une part, le dispositif de transport et de distribution d'un objet enroulé présente les caractéristiques décrites ci-dessus, d'autre part, l'objet enroulé est un câble et, d'autre part encore, le touret de câble est positionné sur le support en sorte que l'axe de rotation selon lequel s'étend le cylindre du touret, soit passe par le point en lequel les axes de rotation des roues sont sécants, soit est au moins parallèle à un axe qui passe par ce point.

Ainsi, l'invention concerne un dispositif de transport et de distribution d'un objet enroulé. Ce dispositif comporte une pluralité de systèmes d'immobilisation qui sont agencés en sorte que, en configuration active d'immobilisation de ces systèmes d'immobilisation, les axes de rotation des roues sont sécants en un même point. Ces caractéristiques permettent, avantageusement et en configuration active d'immobilisation des systèmes d'immobilisation, au dispositif de transport et de distribution de tourner autour d'un axe de rotation qui passe par le point en lequel les axes de rotation des roues sont sécants.

L'invention concerne, aussi, un ensemble qui comporte, d'une part, un tel dispositif de transport et de distribution d'un objet enroulé et, d'autre part, un enroulement d'un tel objet enroulé positionné sur le support d'un tel dispositif. Ces caractéristiques permettent, avantageusement et en configuration active d'immobilisation de ces systèmes d'immobilisation, lors de l'utilisation (plus particulièrement lors de la distribution) de l'objet enroulé et en exerçant une traction sur cet objet enroulé, d'assurer la rotation du dispositif et de l'enroulement autour d'un axe de rotation qui passe par le point en lequel les axes de rotation des roues sont sécants et ainsi d'assurer le déroulement (plus particulièrement la distribution) de l'objet enroulé, notamment au fur et à mesure de l'utilisation de cet objet enroulé. Ceci permet, avantageusement et lors de l'utilisation de l'objet enroulé, d'éviter la torsion de cet objet et, ainsi, de faciliter son utilisation et/ou sa mise en place.

L'invention concerne, alors aussi et plus particulièrement, un ensemble qui comporte, d'une part, un tel dispositif de transport et de distribution et, d'autre part, un touret de câble qui est positionné sur le support de ce dispositif en sorte que l'axe de rotation selon lequel s'étend le cylindre de ce touret passe par le point en lequel les axes de rotation des roues du dispositif sont sécants. Ces caractéristiques permettent, avantageusement, lors de l'utilisation du câble et en exerçant une traction sur ce câble, d'assurer la rotation du dispositif et du touret de câble et ainsi le déroulement du câble enroulé sur le cylindre du touret, ceci au fur et à mesure de l'utilisation de ce câble. Ceci permet, là encore, d'éviter la torsion de ce câble et, ainsi, de faciliter l'utilisation et/ou sa mise en place.

Une autre caractéristique concerne le fait que lorsque le support comporte un plateau, ce plateau comporte des bords latéraux qui présentent, chacun, un décrochement. Les décrochements des bords latéraux du plateau d'un tel dispositifs de transport et de distribution définissent, chacun, un renfoncement à l'intérieur duquel vient se positionner au moins une partie d'une roue (voire encore une partie d'une chape, ou encore une partie d'un moyen de montage d'une telle chape sur un plateau ou encore une partie d'un système d'immobilisation) que comporte un autre dispositif de transport et de distribution conforme à l'invention. De tels décrochements permettent, alors, de superposer une pluralité de dispositifs de transport et de distribution conformes à l'invention et de faire en sorte que la hauteur de ces dispositifs superposés soit, avantageusement, inférieure à la somme des hauteurs des dispositifs constituant cette superposition.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

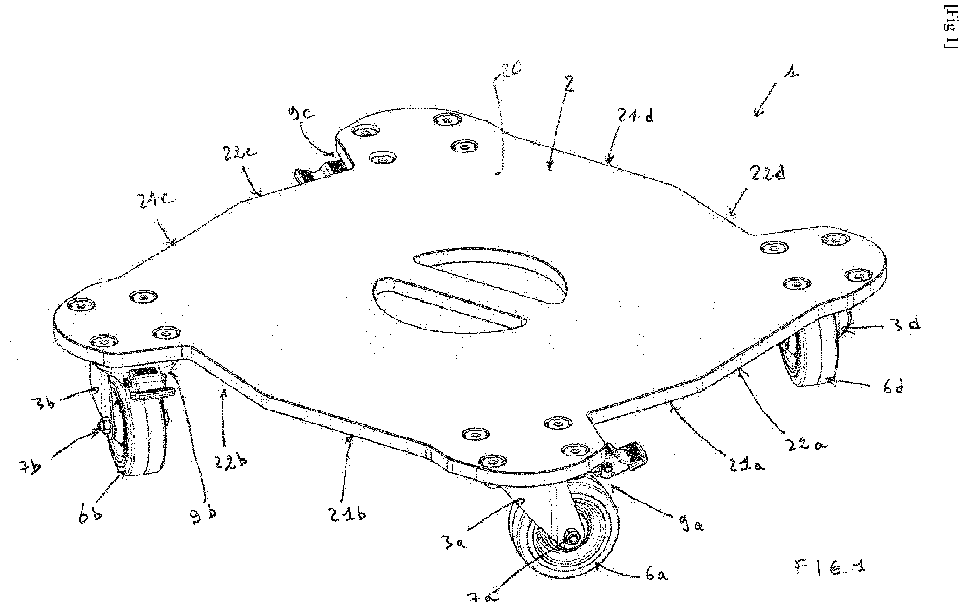

[Fig 1] est une vue schématisée, perspective et de dessus d'un dispositif de transport et de distribution conforme à l'invention.

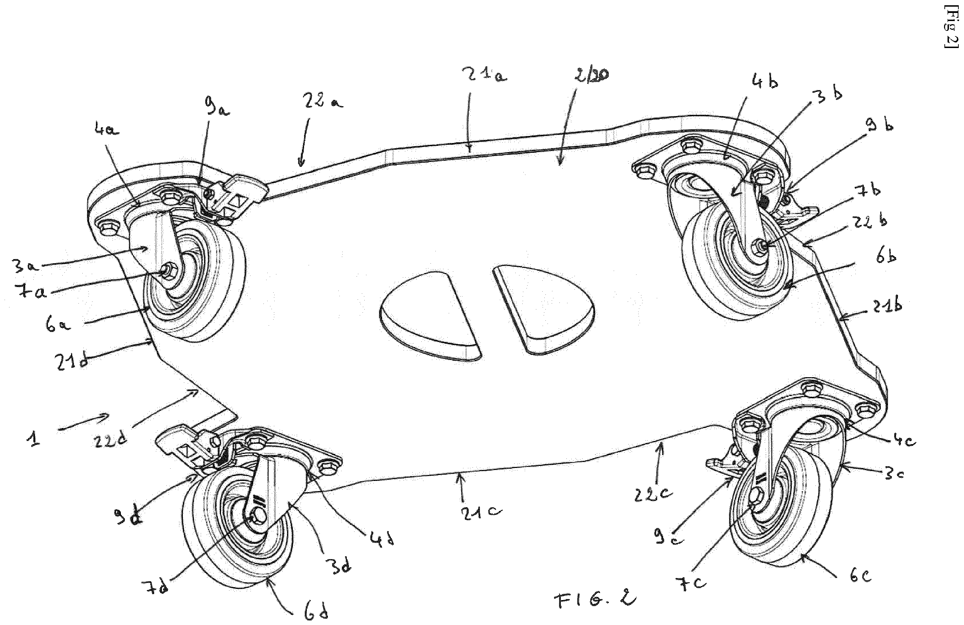

[Fig 2] est une vue schématisée, en perspective et de dessous du dispositif illustré figure 1.

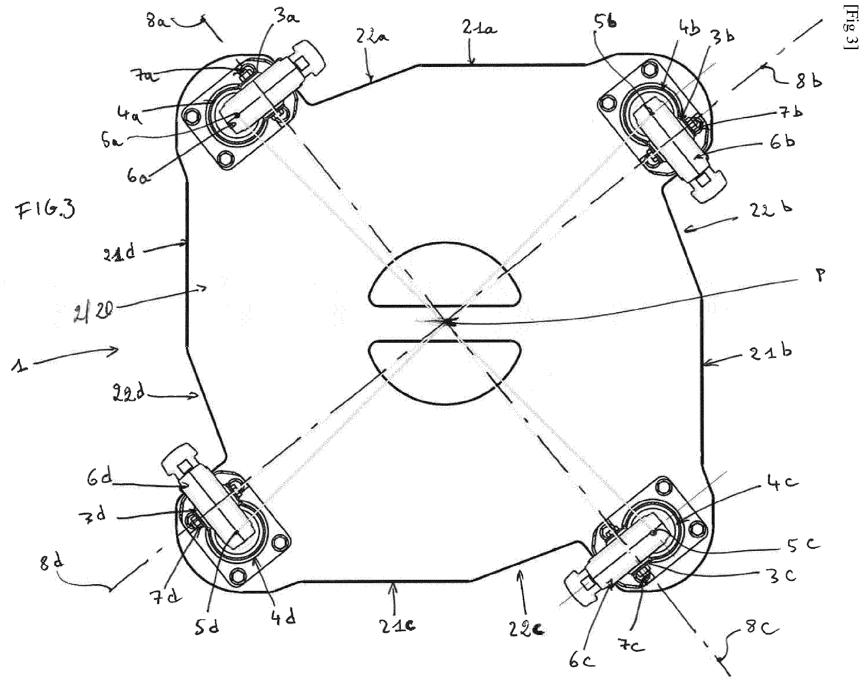

[Fig 3] est une vue schématisée et de dessous du dispositif illustré figures 1 et 2.

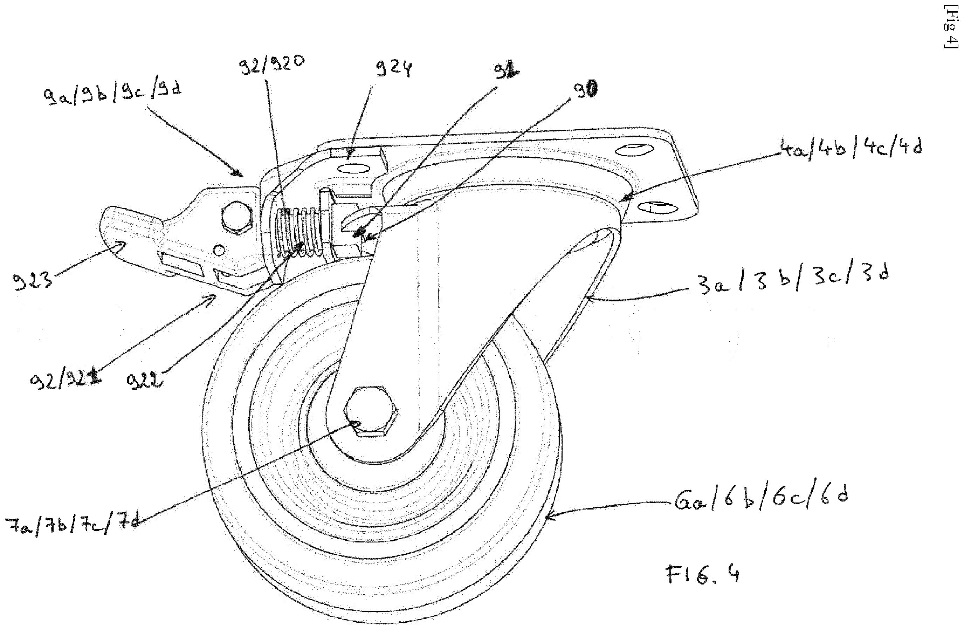

[Fig 4] est une vue schématisée, en perspective et en détail d'un système d'immobilisation que comporte le dispositif illustré figures 1 à 3.

La présente invention concerne le domaine de la fabrication des dispositifs qui sont configurés pour transporter et pour distribuer un objet enroulé, plus particulièrement sur le lieu d'utilisation de cet objet, notamment sur un chantier.

L'invention concerne, alors, un dispositif de transport et de distribution 1 d'un objet enroulé.

Pour des raisons de simplification, dans la suite de la description, un tel dispositif de transport et de distribution 1 d'un objet enroulé sera dénommé « dispositif 1 ».

Un tel dispositif 1 comporte un support 2 qui est destiné à recevoir un objet enroulé.

Selon un premier mode de réalisation non représenté, un tel support 2 peut adopter la forme d'un châssis, notamment résultant de l'assemblage d'une pluralité d'éléments, par exemple constitués par des profilés, de préférence tubulaires.

Selon un autre mode de réalisation non représenté, un tel support 2 peut adopter la forme d'une structure comportant une pluralité de pieds, notamment s'étendant de manière radiale.

Cependant et selon un mode de réalisation préféré illustré dans les figures en annexe, un tel support 2 adopte la forme d'un plateau 20 qui s'étend selon un plan.

Un tel support 2 est destiné à recevoir un objet enroulé qui peut alors venir reposer directement sur ce support 2 (plus particulièrement sur le plateau 20 d'un tel support 2) ou être enroulé sur ou autour d'un élément (plus particulièrement autour d'un cylindre d'un touret tel qu'il sera décrit ci-dessous) qui repose alors sur ce support 2 (plus particulièrement sur le plateau 20 d'un tel support 2).

Un tel dispositif 1 comporte, également, une pluralité de chapes (3a ; 3b ; 3c ; 3d) ainsi qu'une pluralité de moyens de montage (4a ; 4b ; 4c ; 4d) chacun conçu pour monter l'une de ces chapes (3a ; 3b ; 3c ; 3d) sur le support 2, ceci en rotation autour d'un axe de rotation (5a ; 5b ; 5c ; 5d) qui est parallèle à au moins l'un des axes de rotation (5b ; 5c ; 5d ; 5a) autour duquel au moins une autre desdites chapes (3b ; 3c ; 3d ; 3a) est montée en rotation sur le support 2.

Lorsque le support 2 comporte un plateau 20, un tel axe de rotation (5a ; 5b ; 5c ; 5d) est perpendiculaire au plan selon lequel s'étend ce plateau 2.

Selon une autre caractéristique, une telle chape (3a ; 3b ; 3c ; 3d) s'étend selon un plan qui passe par l'axe de rotation (5a ; 5b ; 5c ; 5d) d'une telle chape (3a ; 3b ; 3c ; 3d).

Lorsque le support 2 comporte un plateau 20, le plan selon lequel s'étend une telle chape (3a ; 3b ; 3c ; 3d) est perpendiculaire au plan selon lequel s'étend le plateau 2.

En ce qui concerne ledit moyen de montage (4a ; 4b ; 4c ; 4d), celui-ci peut comporter une couronne à billes ou analogue.

Un tel dispositif 1 comporte, aussi, une pluralité de roues (6a ; 6b ; 6c ; 6d) ainsi qu'une pluralité de moyens de montage (7a ; 7b ; 7c ; 7d) chacun conçu pour monter l'une desdites roues (6a ; 6b ; 6c ; 6d) sur l'une desdites chapes (3a ; 3b ; 3c ; 3d), ceci en rotation autour d'un axe de rotation (8a ; 8b ; 8c ; 8d).

Lorsque le support 2 comporte un plateau 20, un tel axe de rotation (8a ; 8b ; 8c ; 8d) est parallèle au plan selon lequel s'étend le plateau 2.

Selon une autre caractéristique, une telle roue (6a ; 6b ; 6c ; 6d) s'étend selon un plan qui est perpendiculaire à l'axe de rotation (8a ; 8b ; 8c ; 8d) d'une telle roue (6a ; 6b ; 6c ; 6d). De manière additionnelle, le plan selon lequel s'étend une telle roue (6a ; 6b ; 6c ; 6d) est au moins parallèle au plan selon lequel s'étend la chape (3a ; 3b ; 3c ; 3d) sur laquelle est montée une telle roue (6a ; 6b ; 6c ; 6d).

Lorsque le support 2 comporte un plateau 20, le plan selon lequel s'étend une telle roue (6a ; 6b ; 6c ; 6d) est perpendiculaire au plan selon lequel s'étend le plateau 2.

Selon l'invention, le dispositif 1 comporte, encore, une pluralité de systèmes d'immobilisation (9a ; 9b ; 9c ; 9d) qui sont conçus, chacun, pour adopter une configuration inactive et une configuration active d'immobilisation de l'une des chapes (3a ; 3b ; 3c ; 3d) par rapport au support 2.

En fait, dans ce dispositif 1, chaque chape (3a ; 3b ; 3c ; 3d) est complétée par un tel système d'immobilisation (9a ; 9b ; 9c ; 9d) qui est conçu pour adopter une configuration inactive et une configuration active d'immobilisation d'une telle chape (3a ; 3b ; 3c ; 3d) par rapport au support 2.

A ce propos, on observera que, en configuration inactive d'immobilisation des systèmes d'immobilisation (9a ; 9b ; 9c ; 9d), les chapes (3a ; 3b ; 3c ; 3d) sont libres en rotation autour de leur axe de rotation (5a ; 5b ; 5c ; 5d), ceci par rapport au support 2. Dans cette configuration inactive d'immobilisation de ces systèmes d'immobilisation (9a ; 9b ; 9c ; 9d), le dispositif 1 peut, alors, être déplacé en roulement dans toutes les directions ce qui permet, avantageusement, d'acheminer ce dispositif 1 à l'endroit de l'utilisation (plus particulièrement de la distribution) de l'objet enroulé reçu sur le support 2 et, ainsi, de transporter cet objet enroulé à cet endroit.

On observera, également, que, en configuration active d'immobilisation des systèmes d'immobilisation (9a ; 9b ; 9c ; 9d), les chapes (3a ; 3b ; 3c ; 3d) sont immobiles par rapport au support 2 et ne peuvent, donc, pas tourner en rotation autour de leur axe de rotation (5a ; 5b ; 5c ; 5d), ceci par rapport au support 2.

Selon une autre caractéristique, les systèmes d'immobilisation (9a ; 9b ; 9c ; 9d) sont agencés en sorte que, en configuration active d'immobilisation de ces systèmes d'immobilisation (9a ; 9b ; 9c ; 9d), les axes de rotation (8a ; 8b ; 8c ; 8d) des roues (6a ; 6b ; 6c ; 6d) sont sécants en un même point P.

La présence de ces systèmes d'immobilisation (9a ; 9b ; 9c ; 9d) permet, alors et en configuration active d'immobilisation de ces systèmes d'immobilisation (9a ; 9b ; 9c ; 9d), au dispositif 1 d'être mobile en rotation autour d'un axe de rotation qui passe par le point P en lequel les axes de rotation (8a ; 8b ; 8c ; 8d) des roues (6a ; 6b ; 6c ; 6d) sont sécants.

Selon une autre caractéristique, ces systèmes d'immobilisation (9a ; 9b ; 9c ; 9d) sont agencés pour, en configuration active d'immobilisation de ces systèmes d'immobilisation (9a ; 9b ; 9c ; 9d), immobiliser les chapes (3a ; 3b ; 3c ; 3d) par rapport au support 2, ceci dans une position dans laquelle les plans, selon lesquels s'étendent les roues (6a ; 6b ; 6c ; 6d), sont tangents, soit à un même cercle, soit à une pluralité de cercles concentriques.

Tel que mentionné ci-dessus, les axes de rotation (8a ; 8b ; 8c ; 8d) des roues (6a ; 6b ; 6c ; 6d) sont sécants en un même point P. Aussi et selon une caractéristique additionnelle, ce point P est, alors, confondu avec le centre du cercle ou avec le centre des cercles concentriques mentionnés ci-dessus.

Encore une autre caractéristique concerne le fait que les systèmes d'immobilisation (9a ; 9b ; 9c ; 9d) sont agencés pour, en configuration active d'immobilisation de ces systèmes d'immobilisation (9a ; 9b ; 9c ; 9d), immobiliser les chapes (3a ; 3b ; 3c ; 3d) par rapport au support 2, ceci dans une position dans laquelle les plans, selon lesquels s'étendent les chapes (3a ; 3b ; 3c ; 3d), sont tangents, soit à un même cercle, soit à une pluralité de cercles concentriques.

Tel que mentionné ci-dessus, les axes de rotation (8a ; 8b ; 8c ; 8d) des roues (6a ; 6b ; 6c ; 6d) sont sécants en un même point P. Aussi et selon une caractéristique additionnelle, ce point P est, alors, confondu avec le centre du cercle ou avec le centre des cercles concentriques mentionnés ci-dessus.

Une autre caractéristique concerne le fait que chaque système d'immobilisation (9a ; 9b ; 9c ; 9d) comporte, d'une part, des moyens d'immobilisation 90 que comporte ladite chape (3a ; 3b ; 3c ; 3d) qui est complétée par un tel système d'immobilisation (9a ; 9b ; 9c ; 9d). De tels moyens d'immobilisation 90 peuvent adopter la forme d'au moins une butée d'arrêt ou (et de préférence) d'un logement.

D'autre part, chaque système d'immobilisation (9a ; 9b ; 9c ; 9d) comporte des moyens d'immobilisation complémentaires 91 qui sont mobiles au moins par rapport à ladite chape (3a ; 3b ; 3c ; 3d) qui est complétée par un tel système d'immobilisation (9a ; 9b ; 9c ; 9d). En fait, ces moyens d'immobilisation complémentaires 91 sont mobiles entre une position inactive d'immobilisation dans laquelle ces moyens d'immobilisation complémentaires 91 ne coopèrent pas avec les moyens d'immobilisation 90 et une position active dans laquelle ces moyens d'immobilisation complémentaires 91 coopèrent avec les moyens d'immobilisation 90.

On observera que ces moyens d'immobilisation complémentaires 91 sont, plus particulièrement, associés au support 2 ou à une partie fixe du moyen de montage (4a ; 4b ; 4c ; 4d) d'une chape (3a ; 3b ; 3c ; 3d). De tels moyens de d'immobilisation complémentaires 91 peuvent adopter la forme d'un doigt ou d'un ergot.

D'autre part encore, chaque système d'immobilisation (9a ; 9b ; 9c ; 9d) comporte des moyens de commande 92 qui sont configurés pour commander le passage des moyens d'immobilisation complémentaires 91 de la position inactive d'immobilisation à la position active d'immobilisation et inversement, plus particulièrement sous l'effet d'un actionnement, notamment manuel.

Selon un premier mode de réalisation non représenté, ces moyens de commande 92 peuvent comporter un levier, qui est monté en rotation par rapport au support 2 (plus particulièrement sur un tel support 2 ou sur un élément solidaire fixement de ce support 2) autour d'un axe de rotation, qui est solidaire en déplacement des moyens d'immobilisation complémentaires 91, et qui est susceptible d'être actionné manuellement.

Lorsque le support 2 comporte un plateau 20, l'axe de rotation du levier peut être parallèle au plan selon lequel s'étend ce plateau 20.

Selon un autre mode de réalisation illustré sur les figures en annexe, ces moyens de commande 92 peuvent comporter, d'une part, des moyens de rappel 920 qui sont configurés pour entraîner les moyens d'immobilisation complémentaires 91 à partir de la position inactive d'immobilisation vers la position active d'immobilisation, d'autre part, des moyens d'entraînement 921 qui sont configurés pour entraîner ces moyens d'immobilisation complémentaires 91 au moins à partir de la position active d'immobilisation vers la position inactive d'immobilisation, ceci à l'encontre de l'action des moyens de rappel 920.

De tels moyens d'entraînement 921 peuvent comporter, d'une part, une tige 922, qui présente une première extrémité solidaire fixement desdits moyens de d'immobilisation complémentaires 91, qui est solidaire en déplacement de ces moyens d'immobilisation complémentaires 91, et autour de laquelle sont positionnés les moyens de rappel 920 qui prennent appui contre les moyens d'immobilisation complémentaires 91.

D'autre part, ces moyens d'entraînement 921 peuvent, encore, comporter un levier 923, qui est susceptible d'être actionné manuellement, qui est monté sur une deuxième extrémité que présente la tige 922, ceci en rotation par rapport à cette tige 922, par rapport au support 2, et autour d'un axe de rotation qui, lorsque le support comporte un plateau 20, peut être parallèle au plan selon lequel s'étend ce plateau 20.

A ce propos, on observera que le dispositif 1 comporte, alors, également, un support 924 (plus particulièrement sous la forme d'un étrier ou analogue), qui est fixé sur le support 2 ou sur une partie fixe des moyens de montage (4a ; 4b ; 4c ; 4d) d'une chape (3a ; 3b ; 3c ; 3d) sur le support 2, qui est traversé par la tige 922 ainsi que par les moyens d'immobilisation complémentaires 91, et contre lequel prennent appui les moyens de rappel 920 ainsi que le levier 923 (notamment de part et d'autre).

Encore une autre caractéristique du dispositif 1 consiste en ce que, lorsque le support 2 comporte un plateau 20, ce plateau 20 comporte des bords latéraux (21a ; 21b ; 21c ; 21d) qui présentent, chacun, un décrochement (22a ; 22b ; 22c ; 22d) localisé à proximité de l'un des systèmes d'immobilisation (9a ; 9b ; 9c ; 9d) et/ou de l'un des moyens de montage (4a ; 4b ; 4c ; 4d) de l'une des chapes (3a ; 3b ; 3c ; 3d) sur le plateau 20.

Un tel décrochement (22a ; 22b ; 22c ; 22d) est orienté en direction d'un autre bord latéral (21b ; 21c ; 21d ; 21a) du plateau 20 et/ou en direction d'une partie centrale de ce plateau 20.

Un tel décrochement (22a ; 22b ; 22c ; 22d) définit un renfoncement à l'intérieur duquel vient se positionner au moins une partie d'une roue (6a ; 6b ; 6c ; 6d), voire encore une partie d'une chape (3a ; 3b ; 3c ; 3d), ou encore une partie d'un moyen de montage (4a ; 4b ; 4c ; 4d) d'une telle chape (3a ; 3b ; 3c ; 3d) sur le plateau 20, ou encore une partie d'un système d'immobilisation (9a ; 9b ; 9c ; 9d) que comporte un autre dispositif 1 conforme à l'invention, ceci pour une superposition ou un empilement d'une pluralité de ces dispositifs 1.

L'invention concerne, également, un ensemble comportant, d'une part, un dispositif de transport et de distribution 1 d'un objet enroulé et, d'autre part, un enroulement d'un objet enroulé qui s'étend autour d'un axe d'enroulement.

Dans un tel ensemble, le dispositif de transport et de distribution 1 d'un objet enroulé présente au moins une partie des caractéristiques décrites ci-dessus.

De plus, dans cet ensemble, l'enroulement est positionné (notamment repose directement) sur le support 2 en sorte que l'axe d'enroulement (autour duquel s'étend l'enroulement), soit passe par le point P en lequel les axes de rotation (8a ; 8b ; 8c ; 8d) des roues (6a ; 6b ; 6c ; 6d) sont sécants (mode de réalisation préféré), soit est au moins parallèle à (voire, et de préférence, confondu avec) un axe qui passe par ce point P.

Lorsque le support 2 comporte un plateau 20, l'axe d'enroulement (autour duquel s'étend l'enroulement) est perpendiculaire au plan selon lequel s'étend le plateau 20.

Dans un tel ensemble, ledit objet enroulé peut être constitué par un tuyau (notamment d'arrosage), par une élingue, par un filin, par une corde, par un fil (notamment électrique), par un câble (notamment électrique) ou autre.

L'invention concerne, encore, un ensemble comportant, d'une part, un dispositif de transport et de distribution 1 d'un objet enroulé et, d'autre part, un touret de câble qui comporte un cylindre (qui s'étend selon un axe de rotation) ainsi qu'un câble qui est enroulé autour de ce cylindre.

Dans cet ensemble, le dispositif de transport et de distribution 1 d'un objet enroulé présente les caractéristiques décrites ci-dessus. De plus, dans cet ensemble, l'objet enroulé est un câble, notamment électrique. En outre, dans cet ensemble, le touret de câble est positionné sur le support 2 en sorte que l'axe de rotation selon lequel s'étend le cylindre du touret, soit passe par le point P en lequel les axes de rotation (8a ; 8b ; 8c ; 8d) des roues (6a ; 6b ; 6c ; 6d) sont sécants (mode de réalisation préféré), soit est au moins parallèle à (voire, et de préférence, confondu avec) un axe qui passe par ce point P.

Lorsque le support 2 comporte un plateau 20, l'axe rotation selon lequel s'étend le cylindre du touret est perpendiculaire au plan selon lequel s'étend le plateau 20.

## Revendications

1. Dispositif de transport et de distribution (1) d'un objet enroulé, ce dispositif (1) comporte, d'une part, un support (2) qui est destiné à recevoir un objet enroulé, d'autre part, une pluralité de chapes (3a ; 3b ; 3c ; 3d) ainsi qu'une pluralité de moyens de montage (4a ; 4b ; 4c ; 4d) chacun conçu pour monter l'une de ces chapes (3a ; 3b ; 3c ; 3d) sur le support (2), ceci en rotation autour d'un axe de rotation (5a ; 5b ; 5c ; 5d) parallèle à au moins l'un des axes de rotation (5b ; 5c ; 5d ; 5a) autour duquel au moins une autre desdites chapes (3b ; 3c ; 3d ; 3a) est montée en rotation sur le support (2), d'autre part encore, une pluralité de roues (6a ; 6b ; 6c ; 6d) ainsi qu'une pluralité de moyens de montage (7a ; 7b ; 7c ; 7d) chacun conçu pour monter l'une desdites roues (6a ; 6b ; 6c ; 6d) sur l'une desdites chapes (3a ; 3b ; 3c ; 3d), ceci en rotation autour d'un axe de rotation (8a ; 8b ; 8c ; 8d), **caractérisé par le fait que** :
- chaque chape (3a ; 3b ; 3c ; 3d) est complétée par un système d'immobilisation (9a ; 9b ; 9c ; 9d), que comporte le dispositif de transport et de distribution (1), et qui est conçu pour adopter une configuration inactive et une configuration active d'immobilisation d'une telle chape (3a ; 3b ; 3c ; 3d) par rapport au support (2) ;
- les systèmes d'immobilisation (9a ; 9b ; 9c ; 9d) sont agencés en sorte que, en configuration active d'immobilisation de ces systèmes d'immobilisation (9a ; 9b ; 9c ; 9d), les axes de rotation (8a ; 8b ; 8c ; 8d) des roues (6a ; 6b ; 6c ; 6d) sont sécants en un même point (P) ;
- chaque système d'immobilisation (9a ; 9b ; 9c ; 9d) comporte, d'une part, des moyens d'immobilisation (90) que comporte ladite chape (3a ; 3b ; 3c ; 3d) qui est complétée par un tel système d'immobilisation (9a ; 9b ; 9c ; 9d), d'autre part, des moyens d'immobilisation complémentaires (91) qui sont mobiles au moins par rapport à ladite chape (3a ; 3b ; 3c ; 3d) qui est complétée par un tel système d'immobilisation (9a ; 9b ; 9c ; 9d), ceci entre une position inactive d'immobilisation dans laquelle ces moyens d'immobilisation complémentaires (91) ne coopèrent pas avec les moyens d'immobilisation (90) et une position active dans laquelle ces moyens d'immobilisation complémentaires (91) coopèrent avec les moyens d'immobilisation (90) et, d'autre part encore, des moyens de commande (92) qui sont configurés pour commander le passage des moyens d'immobilisation complémentaires (91) de la position inactive d'immobilisation à la position active d'immobilisation et inversement.

2. Dispositif de transport et de distribution (1) d'un objet enroulé selon la revendication 1, **caractérisé par le fait que**, d'une part, les roues (6a ; 6b ; 6c ; 6d) s'étendent, chacune, selon un plan qui est perpendiculaire à l'axe de rotation (8a ; 8b ; 8c ; 8d) d'une telle roue (6a ; 6b ; 6c ; 6d) et, d'autre part, les systèmes d'immobilisation (9a ; 9b ; 9c ; 9d) sont agencés pour, en configuration active d'immobilisation, immobiliser les chapes (3a ; 3b ; 3c ; 3d) par rapport au support (2), ceci dans une position dans laquelle les plans, selon lesquels s'étendent les roues (6a ; 6b ; 6c ; 6d), sont tangents, soit à un même cercle, soit à une pluralité de cercles concentriques.

3. Dispositif de transport et de distribution (1) d'un objet enroulé selon l'une quelconque des revendications précédentes, **caractérisé par le fait que**, d'une part, les chapes (3a ; 3b ; 3c ; 3d) s'étendent, chacune, selon un plan qui passe par l'axe de rotation (5a ; 5b ; 5c ; 5d) d'une telle chape (3a ; 3b ; 3c ; 3d) et, d'autre part, les systèmes d'immobilisation (9a ; 9b ; 9c ; 9d) sont agencés pour, en configuration active d'immobilisation, immobiliser les chapes (3a ; 3b ; 3c ; 3d) par rapport au support (2), ceci dans une position dans laquelle les plans, selon lesquels s'étendent les chapes (3a ; 3b ; 3c ; 3d), sont tangents, soit à un même cercle, soit à une pluralité de cercles concentriques.

4. Dispositif de transport et de distribution (1) d'un objet enroulé selon l'une quelconque des revendications 2 ou 3, **caractérisé par le fait que** le point (P), en lequel les axes de rotation (8a ; 8b ; 8c ; 8d) des roues (6a ; 6b ; 6c ; 6d) sont sécants, est confondu avec le centre du cercle ou avec le centre des cercles concentriques.

5. Dispositif de transport et de distribution (1) d'un objet enroulé selon l'une quelconque des revendications précédentes, **caractérisé par le fait que** les moyens de commande (92) comportent, d'une part, des moyens de rappel (920) qui sont configurés pour entraîner les moyens d'immobilisation complémentaires (91) à partir de la position inactive d'immobilisation vers la position active d'immobilisation, d'autre part, des moyens d'entraînement (921) qui sont configurés pour entraîner les moyens d'immobilisation complémentaires (91) au moins à partir de la position active d'immobilisation vers la position inactive d'immobilisation, ceci à l'encontre de l'action des moyens de rappel (920).

6. Dispositif de transport et de distribution (1) d'un objet enroulé selon l'une quelconque des revendications précédentes, **caractérisé par le fait que**, d'une part, le support (2) comporte un plateau (20) qui s'étend selon un plan et que, d'autre part, les axes de rotation (5a ; 5b ; 5c ; 5d) autour desquels lesdites chapes (3a ; 3b ; 3c ; 3d) sont montées en rotation sur le support (2) sont perpendiculaires au plan selon lequel s'étend le plateau (20) et/ou les axes de rotation (8a ; 8b ; 8c ; 8d) autour desquels lesdites roues (6a ; 6b ; 6c ; 6d) sont montées en rotation sur lesdites chapes (3a ; 3b ; 3c ; 3d) sont parallèles au plan selon lequel s'étend le plateau (20).

7. Dispositif de transport et de distribution (1) d'un objet enroulé selon la revendication 6, **caractérisé par le fait que** le plateau (20) comporte des bords latéraux (21a ; 21b ; 21c ; 21d) qui présentent, chacun, un décrochement (22a ; 22b ; 22c ; 22d) localisé à proximité de l'un des moyens de montage (4a ; 4b ; 4c ; 4d) de l'une des chapes (3a ; 3b ; 3c ; 3d) sur le plateau (20).

8. Ensemble comportant, d'une part, un dispositif de transport et de distribution (1) d'un objet enroulé et, d'autre part, un enroulement d'un objet enroulé qui s'étend autour d'un axe d'enroulement, **caractérisé par le fait que**, d'une part, le dispositif de transport et de distribution (1) d'un objet enroulé est conforme à l'une quelconque des revendications précédentes et, d'autre part, l'enroulement est positionné sur le support (2) en sorte que l'axe d'enroulement passe par le point (P) en lequel les axes de rotation (8a ; 8b ; 8c ; 8d) des roues (6a ; 6b ; 6c ; 6d) sont sécants.

9. Ensemble comportant, d'une part, un dispositif de transport et de distribution (1) d'un objet enroulé et, d'autre part, un touret de câble qui comporte un cylindre qui s'étend selon un axe de rotation ainsi qu'un câble qui est enroulé autour de ce cylindre, **caractérisé par le fait que**, d'une part, le dispositif de transport et de distribution (1) d'un objet enroulé est conforme à l'une quelconque des revendications 1 à 7, d'autre part, l'objet enroulé est un câble et, d'autre part encore, le touret de câble est positionné sur le support (2) en sorte que l'axe de rotation selon lequel s'étend le cylindre du touret passe par le point (P) en lequel les axes de rotation (8a ; 8b ; 8c ; 8d) des roues (6a ; 6b ; 6c ; 6d) sont sécants.
